# EUROPEAN PATENT SPECIFICATION

(11) **EP 2 748 447 B1**
(45) Date of publication and mention of the grant of the patent: **14.10.2015**
(21) Application number: 12748240.4
(22) Date of filing: 17.07.2012
(51) Int. Cl.: F02D 35/02

(54) **METHOD AND APPARATUS FOR CONTROLLING KNOCK IN AN INTERNAL COMBUSTION ENGINE**
VORRICHTUNG UND VERFAHREN ZUR KLOPFSTEUERUNG BEI EINEM VERBRENNUNGSMOTOR
PROCÉDÉ ET APPAREIL POUR RÉGLER UNE DÉTONATION DANS UN MOTEUR À COMBUSTION INTERNE

(30) Priority: 25.08.2011 FI 20115824
(43) Date of publication of application: 02.07.2014
(73) Proprietor: Wärtsilä Finland Oy, 65380 Vaasa (FI)
(72) Inventor: ÖSTMAN, Fredrik, FI-65100 Vaasa (FI)
(74) Representative: Berggren Oy Ab
(86) International application number: PCT/FI2012/050738
(87) International publication number: WO 2013/026949

(56) References cited:
- DE-A1- 4 142 068
- DE-A1- 19 808 829
- DE-A1- 19 945 369

## Description

### Field of technology

This invention relates to a method and arrangement for controlling harmful events of a reciprocating engine. Especially, this invention relates to a method and arrangement for controlling knock. The engine can be, for example, a diesel engine, a gas engine or an engine that can use a multiple of different fuels. Further, the engine can be a low-speed engine or a medium speed engine.

### Prior art

Reciprocating engines are nowadays electronically controlled. In this way a good driving properties of the engine are possible, and the engine can be run on an optimal level wherein efficiency is good with low emissions. In spite of the running at the optimal level, harmful events may occur. It is important that knock of an internal combustion engine is detected for avoiding dangerous cylinder pressures and pressure oscillations that may damage the cylinder, piston and the crank mechanism. There exist many known solutions to detect knock. The most common way is to measure the vibration levels in the vicinity of the combustion chamber. For example, EP 2189643, US 2010106392, WO 2010013663, US 2009223280, WO 2009031378 and US 2008264150 describe the use of the vibration measurements.

The aim is to avoid the knock condition and for this reason there are used threshold values to indicate the knock condition. The known solutions follow the parameter indicating the knock condition, and when the threshold value is exceeded, the knock control reacts for eliminating the knock. Although the known solutions work satisfactory, it is desirable to have a control device that can provide better quality.

### Short Description

The objective of the invention is to create a control arrangement that can provide better control response as the previous solutions. The objective is achieved in solutions described in the independent claims. The dependent claims describe different embodiments of the invention. Although this text mainly describes the knocking as a harmful event of the engine, the event can be another type of an undesired condition like misfiring. In the case of the other type the control arrangement is adapted to that particular type of the harmful event.

The idea of the invention is that in addition to the reaction to the knock, the operation condition of the engine is defined in relation to the knock condition in order to avoid the knock beforehand and also to control the engine more flexible than in the previous solutions.

The inventive arrangement comprises a control unit that is arranged to form knock control commands to cylinder specific regulating units and is connectable to cylinder specific first sensors. The control unit is also connectable to second sensors of at least two different types. The arrangement further comprises a map for mapping values of the first sensors and the second sensors. The values of the first sensors indicate knock conditions cylinder specifically and the values of the second sensors indicate at least two variables of the engine. The map indicates also a knock area and an operation point of the engine in relation to the variables and the knock condition.

The arrangement further comprises a calculator unit and an adjusting unit 6. The calculator unit is arranged to calculate the shortest distance between the operation point and the knock area, and also arranged to calculate a gradient of the distance. The adjusting unit is arranged to form the knock control commands for regulator units of said variables as a response to the gradient for increasing the distance.

### Drawings

Next the invention is described in more detail with the figures of the attached drawings in which drawings
- Figure 1: illustrates an example of an inventive arrangement and
- Figure 2: illustrates an example of a map of the invention, and

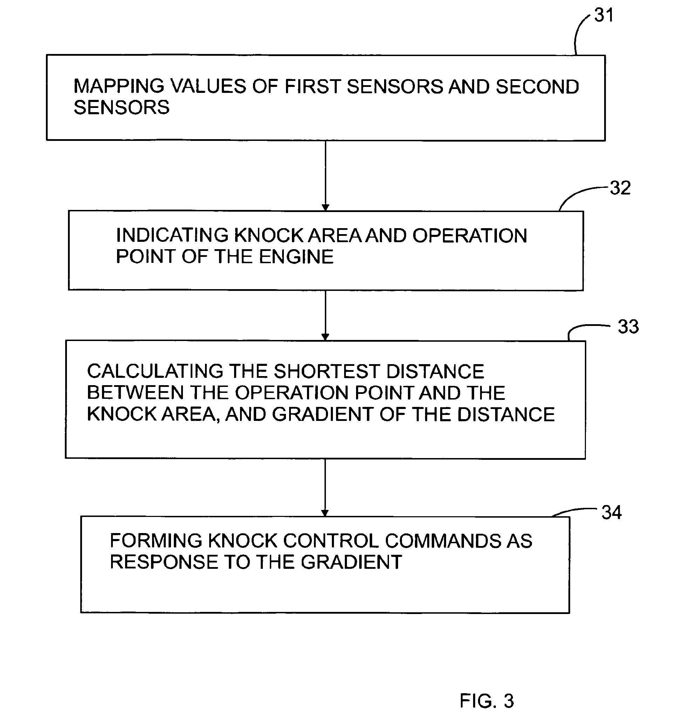

- Figure 3: illustrates an example of a diagram showing an inventive method.

### Description

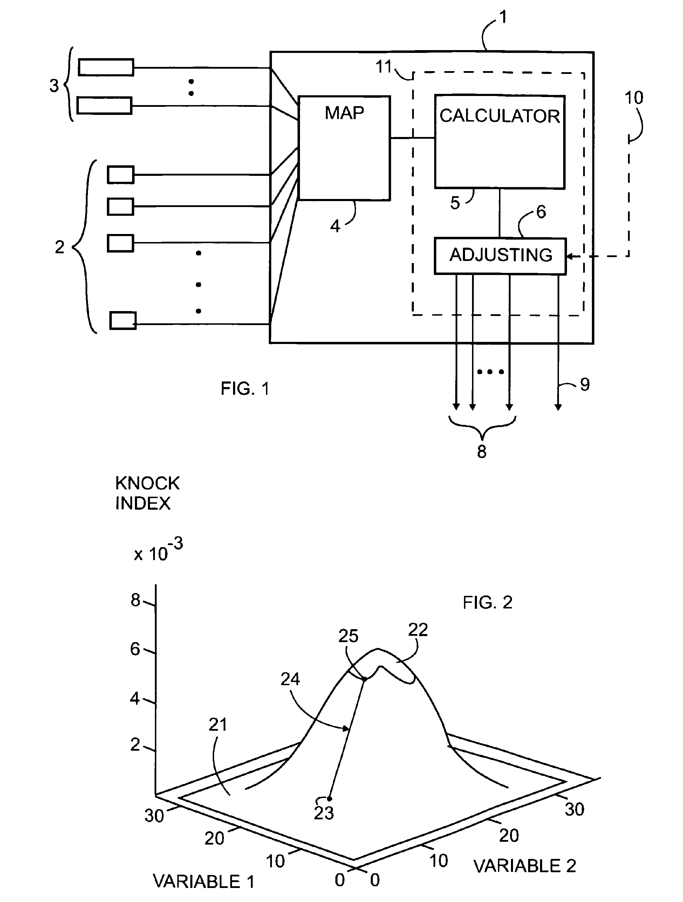

Figure 1 illustrates an example of an arrangement according to the invention. The control arrangement for reciprocating engines comprises a control unit 1 that is arranged to form knock control commands 8 to cylinder specific regulator units and is connectable to cylinder specific first sensors 3. The control unit is also connectable to second sensors 2 of at least two different types. The second sensors 2 measure different parameters of the engine. These parameters are not constant so they are variables that can be used for controlling the engine. The variables may be, for example, manifold air pressure, manifold air temperature, main fuel injection timing, main fuel injection duration, exhaust gas recirculation, spark timing. The set of control variables is dependent on the engine and fuel system type. For example, in common rail diesel engines, manifold air pressure, manifold air temperature, main fuel injection timing and main fuel injection duration are typical choices for the variables to be measured and controlled. The first sensors 3 measure a cylinder specific parameter that indicates knock condition.

The arrangement further comprises a map or model 4 for mapping values of the first sensors 3 and the second sensors 2. The values of the second sensors indicate at least two variables of the engine. Figure 2 shows an example of the map 21 that is three-dimensional. The map 21 indicates a knock area 22 and an operation point 23 of the engine in relation to the variables (VARIABLE 1 and VARIABLE 2) and the knock condition (KNOCK INDEX). The map can be, for example, a self-organizing map. The model can be any type that is able to describe relationship between at least two signals, such as a neural network or a differential function. The knock condition axis (or vector), i.e. the knock index axis can have a scale that is based on a measurement value scale or a normalized measurement value scale (relative value scale). The knock index may represent, for example, a vibration level nearby the cylinder or pressure in the cylinder.

The arrangement further comprises a calculator unit 5 that is arranged to calculate the shortest distance 24 between the operation point 23 and the knock area 22, to be more accurate the distance 24 between the operation point 23 and the nearest knock point 25. The calculator unit is also arranged to calculate a gradient of the distance 24. The gradient comprises partial derivates in relation to the variables. In addition the arrangement comprises an adjusting unit 6 to form the knock control commands 8 to regulator units of said variables as a response to the gradient for increasing the distance. The adjusting unit can be arranged to select the largest partial derivates for forming the knock control commands. In this way it is possible to increase the distance between the operation point 23 and the nearest knock point 25 fast. It also makes possible to move the operation point as little as possible, since the other variables are not changed and the small change of the variable/s having the largest partial derivate can increase the distance enough. The adjusting unit 6 can also be arranged to receive auxiliary data 10 of the engine, and also be arranged to use the auxiliary data to form the knock control commands.

It can be noted that the calculator unit 5 and the adjusting unit 6 can be arranged to form one unit 11, which alternative is represented as a box with a dashed line in Figure 1. The adjusting unit may also provide diagnostic information 9 to maintenance personnel. The map or model can be arranged to be updated to take into account the values of the first sensors and the second sensors. In this way the map is always up-to-date to the engines running environment and condition. An initial map or model can be based on tests run in an engine laboratory or manufacturing tests.

The invention concerns also a method for controlling knock of a reciprocating engine wherein the method comprises a step of forming knock control commands 34 to cylinder specific regulating units. The method further comprises steps of: mapping 31 values of first sensors 3 and second sensors 2, the values of the first sensors indicating knock condition cylinder specifically and the values of the second sensors indicating at least two variables the engine; indicating 32 knock area 22 and an operation point 23 of the engine in relation to the variables and the knock condition; calculating 33 the shortest distance 24 between the operation point 23 and the knock area 22, and also a gradient of the distance. Said step of forming 34 the knock control commands (8) has been adapted to form the commands to regulating units of said variables as a response to the gradient for increasing the distance 24.

It is also possible that when knock occurs or is very near to occur the inventive arrangement can be arranged to determine first whether all cylinders of the engine are too close the knock area or in the knock area. In these cases general control variables of the engine are used to eliminate or reduce the knock, for example manifold air pressure, manifold air temperature and exhaust gas recirculation. Secondly the arrangement is arranged to control cylinder wise the knocking cylinders using cylinder-wise control variables, for example, main fuel injection timing, main fuel injection duration, spark timing, pilot fuel injection timing and pilot fuel injection duration.

The invention makes it possible to adjust one, some or all variables that are inserted into the map 4. Therefore there is great flexibility to form the control commands. The greater the distance is between the operation point and the knock area, the greater the flexibility is. Due to this there are more ways to run the engine than in prior art arrangements, and also taking into account load conditions in more detail. As said above when changing only the greatest partial derivate of the gradient, the control response is very fast.

There are a number of ways to achieve the inventive arrangement. Therefore it is clear that the invention is not restricted to the examples of this text, but the invention can be formed in any form within the limits of the claims.

## Claims

1. A knock control arrangement for reciprocating engines that comprises a control unit (1) that is arranged to form knock control commands (8) to cylinder specific regulating units and is connected to cylinder specific first sensors (3), **characterized in that**, the control unit (1) is connected to second sensors (2) of at least two different types, and the arrangement further comprises a map or model (4, 21) for mapping values of the first sensors (3) and the second sensors (2), the values of the first sensors indicating knock condition cylinder specifically and the values of the second sensors indicating at least two variables the engine, the map or model indicating knock area (22) and an operation point (23) of the engine in relation to the variables and the knock condition,
the arrangement further comprising a calculator unit (5) that is arranged to calculate the shortest distance (24) between the operation point (23) and the nearest knock point in the knock area (22), and also arranged to calculate a gradient between these two points,
and the arrangement also comprising an adjusting unit (6) to form the knock control commands (8) to regulating units of said variables as a response to the gradient in order to increase the distance.
the adjusting unit (6) being arranged to select the largest partial derivate or derivates of the gradient for forming the knock control commands

2. An arrangement according to claim 1, **characterized in that** the adjusting unit (6) is arranged to receive auxiliary data (10) of the engine, and also arranged to use the auxiliary data to form the knock control commands (8).

3. An arrangement according to claim 2, **characterized in that** the calculator unit (5) and the adjusting unit (6) are arranged to form one unit (11).

4. An arrangement according to claim 3, **characterized in that** the map or model (4, 21) is arranged to be updated to take into account the values of the first sensors (3) and the second sensors (2).

5. An arrangement according to claim 1 - 4, **characterized in that** the values of the second sensors (2) indicate at least two of the next variables: manifold air pressure, manifold air temperature, main fuel injection timing, main fuel injection duration, exhaust gas recirculation, spark timing.

6. An arrangement according to claim 1 -4, **characterized in that** in case of the knock the arrangement is first arranged to determine whether all cylinders of the engine are too close the knock are or in the knock area in which case at least two of the next variables are used: manifold air pressure, manifold air temperature and exhaust gas recirculation,
and secondly arranged to control cylinder wise the knocking cylinders using at least one of the next variables: main fuel injection timing, main fuel injection duration, spark timing, pilot fuel injection timing and pilot fuel injection duration.

7. A method for controlling knock of a reciprocating engine, the method comprising a step of forming knock control commands to cylinder specific regulating units **characterized in that** the method further comprises steps of
mapping (31) values of first sensors (3) and second sensors (2), the values of the first sensors indicating knock condition cylinder specifically and the values of the second sensors indicating at least two variables the engine,
indicating (32) knock area (22) and an operation point (23) of the engine in relation to the variables and the knock condition, and
calculating (33) the shortest distance (24) between the operation point (23) and the knock area (22), and also a gradient of the distance,
which step of forming (34) the knock control commands (8) being adapted to form said commands to regulating units of said variables as a response to the gradient for increasing the distance (24).

## Patentansprüche

1. Klopfregelungsanordnung für Kolbenmotoren, die eine Steuereinheit (1) umfasst, die angeordnet ist, um Klopfregelungskommandos (8) an zylinderspezifische Steuereinheiten zu senden und mit zylinderspezifischen ersten Sensoren (3) verbunden ist, **dadurch gekennzeichnet, dass** die Steuereinheit (1) mit zweiten Sensoren (2) wenigstens zweier unterschiedlicher Arten verbunden ist, und, dass die Anordnung ferner eine Karte oder ein Modell (4, 21) zum Mapping von Werten der ersten Sensoren (3) und der zweiten Sensoren (2) umfasst, wobei die Werte der ersten Sensoren den Klopfzustand des Zylinders spezifisch angeben und die Werte der zweiten Sensoren wenigstens zwei Variablen des Motors anzeigen, wobei die Karte oder das Modell den Klopfbereich (22) und einen Arbeitspunkt (23) des Motors in Bezug auf die Variablen und den Klopfzustand anzeigen,
wobei die Anordnung ferner eine Rechnereinheit (5) umfasst, die angeordnet ist, um die kürzeste Distanz (24) zwischen dem Arbeitspunkt (23) und dem nächsten Klopfpunkt im Klopfbereich (22) zu berechnen, und ebenso angeordnet ist, um einen Gradienten zwischen diesen zwei Punkten zu berechnen,
und wobei die Anordnung ferner eine Anpasseinheit (6) umfasst, welche die Klopfsteuerungsbefehle (8) für Steuerungseinheiten der Variablen in Antwort auf den Gradienten bildet, um die Distanz zu vergrößern,
wobei die Anpasseinheit (6) derart angepasst ist, dass das größte Teilderivat oder -Derivate des Gradienten ausgewählt wird/werden, um die Klopfsteuerungskommandos zu bilden.

2. Anordnung nach Anspruch 1, **dadurch gekennzeichnet, dass** die Anpasseinheit (6) angepasst ist, um Hilfsdaten (10) des Motors zu empfangen und ferner angepasst ist, um die Hilfsdaten zu verwenden, um die Klopfsteuerungskommandos (8) zu bilden.

3. Anordnung nach Anspruch 2, **dadurch gekennzeichnet, dass** die Rechnereinheit (5) und die Anpasseinheit (6) derart angepasst sind, dass eine Einheit (11) gebildet wird.

4. Anordnung nach Anspruch 3, **dadurch gekennzeichnet, dass** die Karte oder das Modell (4, 21) angepasst ist, um aktualisiert zu werden, um die Werte der ersten Sensoren (3) und der zweiten Sensoren (2) in Betracht zu ziehen.

5. Anordnung nach Anspruch 1 bis 4, **dadurch gekennzeichnet, dass** die Werte der zweiten Sensoren (2) wenigstens zwei der folgenden Variablen anzeigen: Luftdruck des Verteilers, Lufttemperatur des Verteilers, Zeit der Haupttreibstoffeinspritzung, Dauer der Haupttreibstoffeinspritzung, Abgasrückführung, Zündungstiming.

6. Anordnung nach Anspruch 1 bis 4, **dadurch gekennzeichnet, dass** im Falle des Klopfens, die Anordnung erstens angepasst ist, um zu bestimmen, ob alle Zylinder des Motors zu nahe am Klopfen oder im Klopfbereich sind, in diesem Fall werden zwei der folgenden Variablen verwendet: Luftdruck des Verteilers, Lufttemperatur des Verteilers, Abgasrückführung,
und zweitens angepasst ist, um zylinderweise die Klopfzylinder unter Verwendung wenigstens einer der folgenden Variablen zu steuern: Zeit der Haupttreibstoffeinspritzung, Dauer der Haupttreibstoffeinspritzung, Zündungstiming, Timing der Einspritzung des Zündöls und Dauer der Einspritzung des Zündöls.

7. Verfahren zur Steuerung des Klopfens eines Kolbenmotors, wobei das Verfahren einen Schritt der Bildung von Klopfsteuerungskommandos an zylinderspezifische Steuerungseinheiten umfasst, **dadurch gekennzeichnet, dass** das Verfahren ferner die folgenden Schritte umfasst:
Mapping (31) von Werten der ersten Sensoren (3) und zweiten Sensoren (2), wobei die Werte der ersten Sensoren den Klopfzustand des Zylinders spezifisch angeben und die Werte der zweiten Sensoren wenigstens zwei Variablen des Motors anzeigen; Anzeigen (32) des Klopfbereichs (22) und eines Arbeitspunktes (23) des Motors im Bezug zu den Variablen und dem Klopfzustand; und
Berechnen (33) der kürzesten Distanz (24) zwischen dem Arbeitspunkt (23) und dem Klopfbereich (22), und auch eines Gradienten der Distanz,
wobei der Schritt des Bildens (34) der Klopfsteuerungskommandos (8) angepasst ist, um die Kommandos für Steuereinheiten der Variablen in Antwort auf den Gradienten zur Erhöhung der Distanz (24) zu bilden.

## Revendications

1. Agencement de contrôle de cliquetis pour des moteurs à mouvement alternatif qui comprend une unité de contrôle (1) qui est agencée pour former des commandes de contrôle de cliquetis (8) pour des unités de régulation spécifique aux cylindres et est raccordée aux premiers capteurs spécifiques aux cylindres (3), **caractérisé en ce que** l'unité de contrôle (1) est raccordée à des deuxièmes capteurs (2) d'au moins deux types différents, et l'agencement comprend en plus une carte ou modèle (4, 21) pour cartographier les valeurs des premiers capteurs (3) et des deuxièmes capteurs (2), les valeurs des premiers capteurs indiquant spécifiquement un cylindre à état de cliquetis et les valeurs des deuxièmes capteurs indiquant au moins deux variables du moteur, la carte ou modèle indiquant une zone de cliquetis (22) et un point de fonctionnement (23) du moteur en rapport avec les variables et l'état de cliquetis,
l'agencement comprenant en plus une unité de calculateur (5) qui est agencée pour calculer la distance la plus courte (24) entre le point de fonctionnement (23) et le point de cliquetis le plus proche dans la zone de cliquetis (22) et également agencée pour calculer un gradient entre ces deux points,
et l'agencement comprenant également une unité d'ajustement (6) pour former les commandes de contrôle de cliquetis (8) pour les unités de régulation desdites variables en réponse au gradient afin d'augmenter la distance,
l'unité d'ajustement (6) étant agencée pour sélectionner la dérivée partielle la plus grande ou les dérivées du gradient pour former les commandes de contrôle de cliquetis.

2. Agencement selon la revendication 1 **caractérisé en ce que** l'unité d'ajustement (6) est agencée pour recevoir les données auxiliaires (10) du moteur et également agencée pour utiliser les données auxiliaires pour former les commandes de contrôle de cliquetis (8).

3. Agencement selon la revendication 2 **caractérisé en ce que** l'unité de calculateur (5) et l'unité d'ajustement (6) sont agencées pour former une unité (11).

4. Agencement selon la revendication 3 **caractérisé en ce que** la carte ou modèle (4, 21) est agencé pour être mis à jour pour prendre en compte les valeurs des premiers capteurs (3) et des deuxièmes capteurs (2).

5. Agencement selon la revendication 1-4 **caractérisé en ce que** les valeurs des deuxièmes capteurs (2) indiquent au moins deux des variables suivantes : pression d'air du collecteur d'admission, température d'air du collecteur d'admission, réglage de l'avance à l'injection du carburant principal, durée d'injection du carburant principal, recirculation des gaz d'échappement, calage de l'allumage.

6. Agencement selon la revendication 1-4 **caractérisé en ce qu'**en cas de cliquetis, l'agencement est premièrement agencé pour déterminer si tous les cylindres du moteur sont trop près du cliquetis ou sont dans la zone de cliquetis, auquel cas au moins deux des variables suivantes sont utilisées : pression d'air du collecteur d'admission, température d'air du collecteur d'admission et recirculation des gaz d'échappement,
et deuxièmement agencé pour contrôler le cylindre eu égard aux cylindres présentant un cliquetis, en utilisant au moins une des variables suivantes : réglage de l'avance à l'injection du carburant principal, durée de l'injection du carburant principal, calage de l'allumage, réglage de l'avance à l'injection du carburant pilote et durée de l'injection du carburant pilote.

7. Procédé pour contrôler le cliquetis d'un moteur à mouvement alternatif, le procédé comprenant une étape consistant à former des commandes de contrôle de cliquetis pour les unités de régulation spécifiques aux cylindres **caractérisé en ce que** le procédé comprend en plus les étapes consistant à
cartographier (31) les valeurs des premiers capteurs (3) et des deuxièmes capteurs (2), les valeurs des premiers capteurs indiquant spécifiquement le cylindre présentant un état de cliquetis et les valeurs des deuxièmes capteurs indiquant au moins deux variables du moteur,
indiquer (32) la zone de cliquetis (22) et un point de fonctionnement (23) du moteur en rapport avec les variables et l'état de cliquetis, et
calculer (33) la distance la plus courte (24) entre le point de fonctionnement (23) et la zone de cliquetis (22) et également un gradient de la distance,
laquelle étape consistant à former (34) les commandes de contrôle de cliquetis (8) étant adaptée pour former lesdites commandes pour les unités de régulation desdites variables en réponse au gradient pour augmenter la distance (24).
